# EUROPEAN PATENT APPLICATION

(11) **EP 4 718 335 A1**
(43) Date of publication of application: **01.04.2026**
(21) Application number: 24383043.7
(22) Date of filing: 27.09.2024
(51) Int. Cl.: G06N 5/01, G06F 17/11, G06N 10/60

(54) **QUANTUM-INSPIRED TENSOR NETWORK OPTIMIZER AND METHOD ASSOCIATED THEREWITH**

(71) Applicant: Multiverse Computing, S.L., 20014 Donostia - San Sebastian (ES)
(72) Inventor: PATRA, Siddhartha, Donostia - San Sebastian (ES); SINGH, Sukhbinder, Toronto (CA); JAHROMI, Saeed, Donostia - San Sebastian (ES); ORUS, Roman, Donostia - San Sebastian (ES)
(74) Representative: Elion IP, S.L.

(57) **Abstract**

A method comprising: breaking down a cost function into two-bit terms; applying a two-bit gate of temporal evolution and step change to a selected two-bit term, thereby generating a tensor per bit, with a connecting tensor index between the two tensors; shortening the connecting tensor index; removing at least as many connecting tensors as needed to reduce the number of connecting tensor indices down to a predetermined threshold M; and carrying out the applying, shortening and removing for one, some or all other two-bit terms of the cost function at least until a solution to the cost function reaches a predetermined convergence.

## Description

### TECHNICAL FIELD

The disclosure pertains to the field of quantum computing. More particularly, the disclosure relates to tensor network optimizers in the form of, e.g., a system and method that can be applied to solve industrial problems, such as, e.g., optimizing schedules in a factory, optimizing energy markets, finding relevant configurations of molecules and complex structures, simulating amorphous materials with new properties, and more.

### BACKGROUND

Tensor networks are mathematical structures used in many fields, including quantum physics, computer science, and machine learning. They are particularly useful for representing high-dimensional data and performing complex computations. However, optimizing tensor networks can be a challenging task due to the high computational cost and the need for precision. This is especially true when dealing with industrial problems such as scheduling in factories, optimizing energy markets, and simulating materials with new properties. Furthermore, the correlation structure of the cost function to optimize can significantly affect the performance of tensor network optimizers. Therefore, there is a need for a more efficient and precise optimization of tensor networks.

### SUMMARY

In a first aspect, a method is provided. The method includes: breaking down a cost function in the form of a Quadratic Unconstrained Binary Optimization (i.e., QUBO) problem into two-bit terms; selecting a two-bit term of the cost function; applying a two-bit of temporal evolution and step change (e.g., imaginary-time evolution and Trotter step delta), thereby generating a tensor per bit, with a connecting tensor index between the two tensors; shortening the connecting tensor index by using a value decomposition (e.g., factorization) and keeping a predetermined number D of largest values; when a number of connecting tensor indices of a resulting tensor network is greater that a predetermined threshold M, removing at least as many connecting tensors as needed to reduce the number of connecting tensor indices down to the predetermined threshold M; and repeating the selecting, applying, shortening and removing steps for one, some or all other two-bit terms of the cost function (i.e., optimization function) at least until a solution to the QUBO problem reaches a predetermined convergence. The method may be completely run in one or more classical processors, in which case the method is a computer-implemented method.

In a second aspect, an apparatus or system, for example a data processing apparatus or system, is provided for implementing the method above, for example by way means included in the apparatus or system for carrying out the steps of the method. To this end, the apparatus or system includes at least one processor and at least one memory module for storing instructions that, upon execution by the at least one processor, make the apparatus or system to carry out the method.

The apparatus or system includes, in some embodiments: means for breaking down a cost function in the form of a QUBO problem into two-bit terms; means for selecting a two-bit term of the cost function; means for applying a two-bit of temporal evolution and step change, thereby generating a tensor per bit, with a connecting tensor index between the two tensors; means for shortening the connecting tensor index by using a value decomposition and keeping a predetermined number D of largest values; and means for removing at least as many connecting tensor indices as needed to reduce the number of connecting tensor indices down to a predetermined threshold M when a number of connecting tensor indices of a resulting tensor network is greater that the predetermined threshold M.

In a third aspect, a computer program is provided comprising instructions which, when the program is executed by at least one computing apparatus or system with at least one processor, cause the at least one computing apparatus or system to carry out the steps of a method as disclosed in the first aspect.

In some embodiments, the computer program is embodied on a non-transitory computer-readable storage medium storing the computer program.

In a fourth aspect, a data carrier signal carrying a computer program as described in the third aspect is provided.

### BRIEF DESCRIPTION OF THE DRAWINGS

To complete the description and in order to provide for a better understanding of the disclosure, a set of drawings is provided. Said drawings form an integral part of the description and illustrate embodiments of the disclosure, which should not be interpreted as restricting the scope of the disclosure, but just as examples of how the disclosure can be carried out. The drawings comprise the following figures:
FIG. 1 illustrates, in a flowchart, a method in accordance with some embodiments.
FIG. 2 shows an apparatus or system in accordance with some embodiments.

### DETAILED DESCRIPTION

The aspects of the present disclosure enable the optimization of a tensor network by generating a tensor network that may be according to a correlation structure of a cost function to be optimized, and do so in a dynamic manner. This, in turn, makes it possible to enhance speed and precision of tensor network optimizers, and of optimizers in general.

The aspects of the present disclosure also enable, in some embodiments, to take advantage of such optimized tensor network for the solving of problems such as industrial problems.

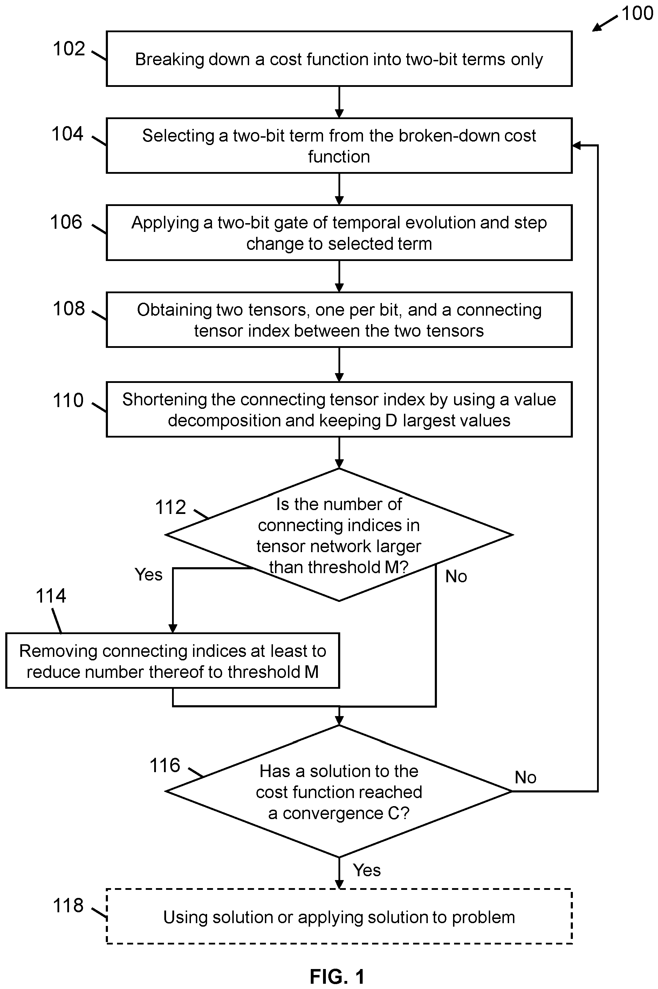

FIG. 1 illustrates, in a flowchart, a method 100 in accordance with certain embodiments.

The method 100 includes a step whereby the computing apparatus or system breaks down 102 a cost function for transforming the function, specifically of a Quadratic Unconstrained Binary Optimization (QUBO) problem, into a format consisting solely of two-bit terms. The cost function may be stored in, e.g., a memory module of the apparatus or system. This transformation comprises processing the cost function of the QUBO problem and restructuring it to only include interactions between pairs of binary variables.

This transformation, i.e., the breaking down, prepares the cost function for the tensor network optimization.

The QUBO problem includes, in some embodiments, one or more variables or parameters measured or measurable with one or more sensors. In this sense, the QUBO problem may be based on a predetermined target like, for example but without limitation, a computing device or system, a factory line or a machine thereof, a factory, a production process of a factory line or a factory, means of transportation or an automatic control unit thereof, an automatic transportation controlling process, an electric grid or network, an energy power plant (such as, e.g., a wind farm, a solar farm, a hydrogen production plant, etc.), an electric power station, an electric power generation process, and/or an electrical energy allocation process.

The measurement of the parameters with the one or more sensors, and/or the definition of the QUBO problem are/is also part of the method of some embodiments.

In some embodiments, the method 100 also includes a step prior to the breaking down 102 whereby a computing apparatus or system receives or provides 100 the cost function such as the cost function of a Quadratic Unconstrained Binary Optimization problem. The cost function can be inputted in the computing apparatus or system manually (e.g., with an user input device such as a keyboard, a touchscreen, etc.) or from another device or system communicatively coupled with the computing apparatus or system, for example a controller of an industrial process, a chemical process, etc. The cost function may be stored in a memory module of the computing apparatus or system for processing. The memory module used for storage can be any digital storage medium capable of retaining data for quick access and manipulation by the apparatus or system, and more specifically, at least one processor thereof.

The QUBO problem is a mathematical construct designed to represent optimization problems where the goal is to find the minimum or maximum value of a function that depends on binary variables, subject to quadratic constraints. The format is particularly suited for problems that can be framed in terms of binary decisions, making it a suitable input for the tensor network optimizer.

With the cost function broken down 102, the method includes a step whereby the computing apparatus or system selects 104 a two-bit term for further processing.

With a term selected 104, the method includes a step whereby the computing apparatus or system applying 106 a two-bit gate of temporal evolution and step change to the selected two-bit term. This operation will result in the method having a step whereby the computing apparatus or system obtains 108 new tensors for each bit of the term, with a connecting tensor index between them.

The application 106 encompasses the application of a two-bit gate that governs temporal evolution and introduces a discrete change in time, which for example is, in some embodiments, a two-bit gate is of imaginary-time evolution and Trotter step delta.

The application 106 results in the creation of two new tensors, corresponding to each bit of the term. Additionally, a tensor link index, i.e., a connecting tensor index, is established between the new tensors. The objective is to evolve the tensor network to reflect the dynamics of the optimization problem, enabling the exploration of configurations in pursuit of an optimal solution.

The step change is a parameter that defines the granularity of the temporal evolution. It represents a finite increment of time that, in the case of Trotter step delta, is used in the Trotter-Suzuki decomposition, a method to approximate the exponential of a sum of non-commuting operators by a product of exponentials of individual operators. This decomposition may simulate the continuous-time evolution of a quantum system in a discrete computational model.

The tensors obtained 108 are mathematical representations that encapsulate states or variables in the optimization problem. The connecting index that emerges between the tensors indicates the relationship between the two bits in the context of the optimization problem.

The purpose of generating these tensors and the connecting index is to construct a tensor network that mirrors the correlation structure of the cost function. This network is utilized in subsequent steps to refine the solution to the problem. The tensor network is dynamic, evolving as the optimization process progresses, with the objective of finding an efficient configuration that minimizes the cost function.

The generation of tensors and the connecting index leverages principles similar to those found in quantum mechanics, such as superposition and entanglement, in a mathematical framework. This approach aims to utilize the complex correlation structures similar to those in quantum systems to enhance the efficiency of solving optimization problems compared to classical algorithms.

The method 100 also includes a step whereby the computing apparatus or system shortens 110 the connecting tensor index by applying a value decomposition and retaining a specified number of values, preferably the largest ones and as many as defined in a configurable predetermined number D. By way of example, the predetermined number D may be, e.g., 10 or more, 50 or more, 100 or more, etc. When the number of connecting tensor indices is equal to or lower than the predetermined number D, preferably no shortening 110 is conducted. The shortening 110 may be truncation in some embodiments. In some embodiments, the value decomposition is Singular Value Decomposition (SVD), which is a mathematical procedure that may decompose a matrix into three other matrices, representing the original singular vectors and singular values of the matrix. The connecting tensor index is a matrix that represents the connections between tensors in a network. By decomposing this index, the optimizer identifies the singular values, which are ordered by their magnitude.

The optimization retains the top D singular values and their corresponding singular vectors. The selection (i.e., configuration) of the predetermined number D may be based on a balance between the representation accuracy of the tensor network and the computational resources. Retaining a larger number of singular values potentially increases the accuracy of the tensor network representation but also requires more computational resources.

The shortening 110 reduces the complexity of the tensor network by discarding the less significant singular values, which have a lower magnitude and contribute less to the overall structure. This reduction is performed to manage the size of the tensor network and to focus computational efforts on the significant aspects of the optimization problem.

The method 100 then checks 112, by the computing apparatus or system, whether a number of connecting tensor indices of the tensor network is greater that a configurable predetermined threshold M. By way of example, the predetermined threshold M may be, e.g., 4, 5, 6 or more, etc. If the number is greater, the computing apparatus or system removes 114 connecting tensors at least to have the number thereof below the threshold M. If the number is not greater, no removal 114 takes place.

This removal 114 or reduction is achieved by evaluating the connecting tensor indices and removing those that are deemed less significant based on a metric, such as a metric related to the Shannon entropy of the squared singular values. In this sense, in some embodiments, the removal 114 of the connecting tensors is of the tensors having a smallest Shannon entropy of the squared singular values. To that end, the Shannon entropy of the squared values may be computed.

The purpose of this computation is to identify which connecting tensor indices have a lower contribution to the overall structure of the tensor network. By identifying and truncating the indices with the smallest entropy, the system can reduce the complexity of the tensor network. This reduction is optional, but preferable, to keep the tensor network manageable and to facilitate the ability of the system to converge to a solution for the optimization problem.

The Shannon entropy provides a quantitative measure of the information content associated with the connecting tensor indices. The squared singular values represent the strength of the connections between tensors in the network. By focusing on the Shannon entropy, the system identifies which connections contribute less to the overall structure and can be removed to reduce complexity without significantly affecting the ability of the network to represent the correlation structure of the cost function.

The Shannon entropy may be computed for each connecting tensor index and stored in a memory module. Then, these indices may be sorted and then the ones with the lowest values are removed 114 until the number of indices aligns with the limit M. This step manages the size of the tensor network, ensuring that it remains within a manageable range for further processing. The reduction of indices is a balancing act between maintaining a representative structure of the cost function and ensuring computational efficiency for the optimization process. The tensors and the indices connecting them are the focus of this step, with the goal of preserving the integrity of the network while adhering to the specified limit M.

The optimization iterates the whole process, as part of an optimization loop, until the tensor network converges to a solution as checked 116 in the method 100 by the computing apparatus or system. The convergence refers to the point at which the tensor network no longer changes significantly with further iterations, suggesting that an optimal or near-optimal solution to the problem has been found. To that end, a configurable predetermined convergence value C may be set, for example, a value C of, e.g., 1e-3 or less, 1e-4 or less, 1e-5 or less, etc.

When there has not been enough convergence (i.e., according to value C), the method 100 goes back to the selection 104 and reiterates the process. The goal of this repetition is to adjust the configuration of the tensor network until it accurately reflects the solution to the optimization problem. If there has been enough convergence, the method 100 may be finished as there has been enough optimization and a solution may have been obtained. The criteria for convergence may be defined by the stability of metrics, such as the value of the cost function or the change in the tensor network's configuration between iterations falling below a predefined threshold, i.e., convergence C.

In some embodiments, if many iterations are conducted without attaining sufficient convergence, parameters of the tensor network may be dynamically adjusted, e.g., a bond dimension thereof, to ease reaching the convergence C.

The selection 104 may be methodically repeated over multiple iterations to ensure comprehensive coverage of the QUBO problem, facilitating the progression towards an optimized solution through iterative updates.

Hence, a different two-bit term is selected 104 to be processed by subsequent operations, setting the stage for the iterative optimization process.

The process of reaching a solution indicates that the tensor network has been optimized to a degree that it can be used to determine the solution to the optimization problem with accuracy.

In some embodiments, as illustrated with a dashed line for the sake of clarity only, the method includes a step whereby the computing apparatus or system uses or applies 118 the solution obtained for the previously developed tensor network to address optimization problems in an industrial setting or problem.

By way of example, in the context of optimizing schedules within a manufacturing environment, the use 118 of the solution may involve utilizing the tensor network to model and solve scheduling challenges. The optimizer considers various objectives and constraints to find efficient schedules. This may include minimizing production time, reducing costs, and/or balancing workloads.

By way of another example, for energy market optimization, the use 118 of the solution may involve employing the tensor network to model and optimize energy distribution and pricing. The optimizer processes energy market data to maximize efficiency and ensure stability by considering supply and demand, production costs, and/or distribution logistics.

By way of another example, when applied to the discovery of molecular configurations or prediction of properties for complex structures, the use 118 of the solution may involve uses the tensor network to navigate the vast configuration space. The goal is to identify stable or desirable structures based on predefined optimization criteria.

By way of another example, in the simulation of amorphous materials, the use 118 of the solution may involve predicts properties of materials without a crystalline structure. The tensor network assists in understanding the impact of different configurations on material properties, potentially leading to the discovery of materials with new characteristics.

Throughout these exemplary applications, the use 118 of the solution is central to performing optimization based on the correlation structure of the cost function as it dynamically generates and adjusts the tensor network to mirror the complexity and constraints of the problem at hand. The process leverages computational resources to manage the intricate calculations required for these optimization tasks. More specifically, the system and method can use imaginary-time evolution to compute the lowest-value configuration of the cost function. This cost function can be recasted as an Ising model, mimicking the physics of a magnet, and the imaginary-time evolution operator can be decomposed as a series of "gates" that are applied to specific bits. In the specific instance of a QUBO cost function, such gates are 2-bit, and they create some correlation between such bits that is accounted for by a bond index in the tensor network. The number of possible values of such bond index is truncated and, moreover, the whole index may be truncated if M is larger than the predetermined value, thus ensuring the efficiency in the manipulation of the network.

Thus, for example, the problem to which the solution is used 118 may include one of: optimizing a schedule in a factory, optimizing an energy market, finding a relevant configuration of at least one molecule and/or at least one complex structure, and simulating an amorphous material with new properties.

Although not illustrated, in some embodiments, after using 118 the solution or applying the solution, the method 100 may include a step whereby the computing apparatus or system updates the cost function of the QUBO problem based on measurements received from one or more sensors so as to obtain a more recent cost function having regard the status of the industrial setting once adjusted with the used 118 solution. In this sense, in some embodiments, the updating of the cost function also includes evaluating whether the updated cost function provides a lower cost than a cost of the cost function before being updated.

In some embodiments, the updating of the cost function includes repeating the breaking down 102, selecting 104, applying 106 for obtaining 108, shortening 110, removing 114 if necessary 112, repeating these steps if necessary 116, and using 118 one or more times for each updated cost function, so as to keep the industrial setting controlled repeatedly.

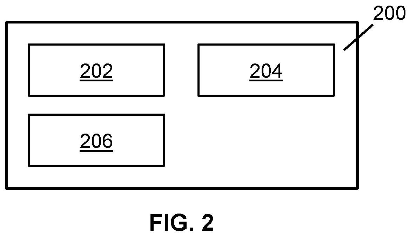

Figure 2 shows an apparatus or system 200 in accordance with embodiments.

The apparatus or system 200 includes one or more processors 202. The apparatus or system 200 also includes at least one memory module 204 for storage of data such as a cost function of a QUBO, entropy values, etc. Additionally, the at least one memory module 204 may store a computer program in the form of instructions that, upon running, perform a method according to the present disclosure.

The apparatus or system 200 may also include, in some embodiments, a communications module 206 configured to transmit data to and/or receive data from, in wired and/or wireless form, computing apparatuses or systems. For example, the apparatus or system 200 may transmit operating instructions to, e.g., a controller for configuring the operation of a predetermined target, and/or receive a cost function of a QUBO from, e.g., a controller that oversees operation of a predetermined target.

In some embodiments, one or more processors 202 comprise or are part of at least one field-programmable gate array (i.e., FPGA), and the at least one FPGA stores instructions and/or runs a method according to the present disclosure.

In some embodiments, the apparatus or system is a tensor network optimizer.

In some embodiments, the apparatus or system is a controller of a predetermined target.

In this text, the term "includes", "comprises" and derivations thereof (such as "including", "comprising", etc.) should not be understood in an excluding sense, that is, these terms should not be interpreted as excluding the possibility that what is described and defined may include further elements, steps, etc.

On the other hand, the disclosure is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A method (100) comprising:
breaking down (102) a cost function in the form of a Quadratic Unconstrained Binary Optimization problem into two-bit terms;
selecting (104) a two-bit term of the cost function;
applying (106) a two-bit gate of temporal evolution and step change to the selected two-bit term, thereby generating (108) a tensor per bit, with a connecting tensor index between the two tensors;
shortening (110) the connecting tensor index by using a value decomposition and keeping a predetermined number D of largest values;
when a number of connecting tensor indices of a resulting tensor network is greater that a predetermined threshold M, removing (114) at least as many connecting tensors as needed to reduce the number of connecting tensor indices down to the predetermined threshold M; and
repeating the selecting, applying, shortening and removing steps for one, some or all other two-bit terms of the cost function at least until a solution to the Quadratic Unconstrained Binary Optimization problem reaches a predetermined convergence.

2. The method (100) of claim 1, wherein the two-bit gate is of imaginary-time evolution and Trotter step delta.

3. The method (100) of any one of the preceding claims, wherein the value decomposition of the shortening step is a truncation using a Singular Value Decomposition.

4. The method (100) of any one of the preceding claims, wherein the removing (114) step removes the connecting tensors having a smallest Shannon entropy of the squared singular values.

5. The method (100) of any one of the preceding claims, further comprising using (116) a solution to the Quadratic Unconstrained Binary Optimization problem or applying the solution to a predetermined problem.

6. The method (100) of claim 5, wherein the problem includes one of: optimizing a schedule in a factory, optimizing an energy market, finding a relevant configuration of at least one molecule and/or at least one complex structure, and simulating an amorphous material with new properties.

7. The method (100) of any one of claims 5-6, further comprising, after using the solution or applying the solution, updating the cost function of the QUBO problem based on measurements received from one or more sensors.

8. The method (100) of claim 7, wherein the updating step further comprises evaluating whether the updated cost function provides a lower cost than a cost of the cost function before being updated.

9. The method (100) of any one of claims 7-8, wherein the updating step further comprises repeating the steps of breaking down, selecting, applying, shortening, repeating, and removing and using one or more times for each updated cost function.

10. The method (100) of any one of the preceding claims, wherein the QUBO problem includes one or more variables or parameters measured or measurable with one or more sensors.

11. The method (100) of any one of the preceding claims, wherein the QUBO problem is based on a predetermined target.

12. An apparatus or system (200) comprising means for carrying out a method of any one of the preceding claims.

13. An apparatus or system (200) comprising at least one processor (202) and at least one memory module (204), the at least one processor and the at least one memory module being configured to:
break down a cost function in the form of a Quadratic Unconstrained Binary Optimization problem into two-bit terms;
select a two-bit term of the cost function;
apply a two-bit gate of temporal evolution and step change to the selected two-bit term, thereby generating a tensor per bit, with a connecting tensor index between the two tensors;
shorten the connecting tensor index by using a value decomposition and keeping a predetermined number D of largest values;
remove at least as many connecting tensors as needed to reduce the number of connecting tensor indices down to a predetermined threshold M when a number of connecting tensor indices of a resulting tensor network is greater that a predetermined threshold M; and
repeat the selection, application, shortening and removal for one, some or all other two-bit terms of the cost function at least until a solution to the Quadratic Unconstrained Binary Optimization problem reaches a predetermined convergence.

14. The apparatus or system (200) of any one of claims 12-13, further comprising a predetermined target, wherein the Quadratic Unconstrained Binary Optimization problem is based on the predetermined target.

15. A computer program comprising instructions which, when the program is executed by at least one computing apparatus or system (200) with at least one processor (202), cause the at least one computing apparatus or system to carry out the steps of a method (100) according to any one of claims 1-11.
